# EUROPEAN PATENT APPLICATION

(11) **EP 4 687 333 A1**
(43) Date of publication of application: **04.02.2026**
(21) Application number: 24192384.6
(22) Date of filing: 01.08.2024
(51) Int. Cl.: H04L 45/24, H04L 1/08, H04W 28/06, H04W 40/02, H04W 40/20, H04W 28/02, H04L 69/14

(54) **REDUNDANT DATA TRANSMISSION OVER MULTIPLE COMMUNICATION LINKS**

(71) Applicant: Siemens Mobility GmbH, 80997 München (DE)
(72) Inventor: Blenk, Andreas, 86916 Kaufering (DE); Frank, Reinhard, 81369 München (DE); Mecklenburg, Ben, 85748 Garching (DE); Michailow, Nicola, 81825 München (DE)
(74) Representative: Siemens Patent Attorneys

(57) **Abstract**

The proposed embodiments relate to a redundant data transmission over multiple communication links, involving a redundant duplication of a data unit, a selection of multiple communication links to be used for transmitting the data unit, an adjustment of a number of multiple communication links for transmission of the data unit and the duplicate, and a de-duplication of the at least one received duplicate to restore the data unit.

The proposed embodiments present several advantages over the existing state of the art. The redundancy of the transmission may be flexibly controlled, as the number of duplicates generated is determined by a packet flow controller that at least may partially inspect the data unit and optionally utilize context data. This allows for a more efficient use of resources by providing only the necessary and adjustable amount of redundancy. The transmission is optimized in that the packet flow controller may select a number of communication links to be used for redundant data exchange in order to improve transmission reliability. Additionally, the method allows for adaptive communication in that the packet flow controller may adjust at least one communication parameter of one or more communication links, enabling the transmission to adapt to changing network conditions and further improving the transmission reliability.

## Description

### Technical Field

The disclosed embodiments generally pertain to wireless networks and wireless communications. The disclosed embodiments specifically relate to a method for redundant data transmission in a wireless network over multiple communication links.

### Background Art

In industrial environments, such as manufacturing plants, there is a growing demand for wireless communication. In scenarios involving mobile components, such as trains operating on tracks, vehicles traversing highways, or Automated Guided Vehicles (AGVs) moving and operating within a factory setting, the need for wireless communication becomes indispensable. The challenge resides in accomplishing high availability, seamless redundancy, and seamless handover. Wi-Fi, a suite of wireless network protocols grounded in the IEEE 802.11 standard, has the potential to serve as the technological basis for wireless transmissions. However, Wi-Fi faces significant challenges that impede its industrial implementation. One such challenge is an industrial demand for high-availability message exchange, which may be crucial for a data exchange of safety-critical applications.

A considerable number of industrial applications demands high availability and redundancy. Safety-critical applications are, for instance, defined by the standard EN 50159, which outlines guidelines for safety-related communication in transmission systems. Controlling remote devices such as robot arms via their digital representations - known as digital twins - requires a high packet transmission quality. Similarly, remote control of surgical equipment is a highly critical application demanding a high level of reliability in data transmission. Even a minor packet loss may have significant consequences, potentially compromising patient safety.

In general, safety-critical applications and services may impose significant challenges on the underlying communication protocols, such as a requirement not to lose more than one or three network packets consecutively.

Accordingly, there is a need in the art for advancing existing methods of redundant data transmission over multiple communication links in order to respond more flexibly to external circumstances in a context-aware manner.

### Summary of the Invention

According to an embodiment, a method for redundant data transmission over multiple communication links is provided, the method including the steps of:
- generating, by a first transceiver (TRA), at least one duplicate of a data unit, a number of duplicates being determined by a packet flow controller (PFC);
- selecting, by the packet flow controller (PFC), a number (NLU) of multiple communication links to be used for transmitting the data unit and the at least one duplicate;
- adjusting, by the packet flow controller (PFC), at least one communication parameter (TXP) of one or more communication link in said number (NLU) of multiple communication links;
- transmitting, by the first transceiver (TRA), the data unit and the at least one duplicate over said number (NLU) of multiple communication links to a second transceiver (TRB); and;
- receiving, by the second transceiver (TRB), at least one duplicate from said number of multiple communication links and de-duplicating the at least one duplicate to restore the data unit.

The proposed method presents several advantages over the existing state of the art. Firstly, the redundancy of the transmission may be controlled, as the number of duplicates generated is determined by a packet flow controller that at least may partially inspect the data unit. This allows for a more efficient use of resources by providing only the necessary and adjustable amount of redundancy.

Furthermore, the transmission process is optimized. The packet flow controller selects a number of communication links to be used for redundant data exchange to improve transmission reliability. Additionally, the method allows for adaptive communication. The packet flow controller adjusts at least one communication parameter of one or more communication links, enabling the system to adapt to changing network conditions and potentially improving reliability and performance. The ability to adjusts at least one communication parameter further enables the embodiments order to respond more flexibly to external circumstances in a context-aware manner.

The proposed redundant data transmission over multiple communication links allow to respond flexibly to external circumstances in a context-aware manner. A context-aware manner may refer to an ability to perceive, interpret, and respond to various elements within its environment which may include utilizing data from sensors to create meaningful adaptations of the data transmission.

The proposed method enhances seamless redundancy by intelligently adapting the number of transmitted data units or data packets, which ensures a more reliable communication process even in fluctuating network conditions.

The proposed method achieves improved efficiency by considering both context and application information, allowing for a more tailored data transmission that aligns with specific user needs and operational scenarios.

Efficiency is further improved through scenario adaptation, where the system dynamically adjusts its parameters to suit the current environmental and operational conditions, leading to optimized performance.

Further advancements may be achieved by utilizing a predictive or learning-based operation model. This model may utilize past experiences and current channel estimations to proactively anticipate future conditions, rather than merely relying on reactive operations based on current channel estimates.

### Description of Embodiments

According to an embodiment, the second transceiver may provide one or more parameters related to the transmission quality, which may be fed back via an optional feedback collector to the packet flow controller. This embodiment features a feedback mechanism wherein the second transceiver determines at least one parameter related to the transmission quality and provides feedback to the packet flow controller. The feedback mechanism may enable the system to continuously monitor and adjust its performance, paving the way for potential improvements in data integrity and transmission efficiency.

According to an embodiment, the steps of selecting and adjusting by the packet flow controller may include an inclusion and evaluation of context information. Including and evaluating context information may advantageously allow the packet flow controller to make more informed decisions, leading to an optimized data transmission. The redundant transmission system may be adapted to changing conditions reported from multiple sources of context information.

According to an embodiment, context information may be retrieved from a context database. Using a context database ensures that multiple sources of context information may feed in context information, leading to more consistent performance.

According to an embodiment, the second transceiver may determine at least one parameter related to the transmission of the data unit and feedback back said at least one parameter to the packet flow controller. The feedback may occur indirectly using the context database. According to another embodiment, at least one application may determine at least one parameter related to the transmission of the data unit and feedback back said at least one parameter to the packet flow controller. The feedback may also occur indirectly using the context database.

According to an embodiment, at least one of a parameter related to a duration of said redundant data transmission may be determined, the parameter including at least a number of retries or other back-offs related to said redundant data transmission and/or a queue size encountered in a processing queue or transmission queue for queuing the data unit. Tracking parameters such as transmission duration, retries, and queue sizes may advantageously help to automatically analyze and tune the redundancy.

According to an embodiment, at least one of a parameter related to a duration of the data transmission may be determined. Further on, at least one of a parameter related to a number of retries or other back-offs related to the data and/or a queue size encountered in a processing queue or transmission queue for queuing the data unit.

According to an embodiment, one of a parameter may be determined, the parameter being related to a current location information of one or more transceivers and/or a current velocity of one or more transceivers and/or a current channel estimation for one or more of said multiple communication links and/or an application state, a buffer status and/or a current network state.

According to an embodiment, a parameter related to geospatial data and/or past channel estimations at a current location may be determined. According to another embodiment, a parameter related to the number of duplicates requisite for successfully transmitting the data unit may be determined.

### Brief Description of the Drawing

The objects as well as further advantages of the present invention will become more apparent and readily appreciated from the following description of the preferred embodiments, taken in conjunction with the accompanying drawing accompanying drawing of which:
- FIG. 1: illustrates a schematic diagram of functional units participating in a redundant data transmission over multiple communication links according to embodiments;
- Fig. 2: illustrates a schematic diagram of a context database along with different sources of information according to embodiments;
- Fig. 3: illustrates a schematic diagram of a feedback collector along with different sources of information according to embodiments;
- Fig. 4: illustrates a schematic diagram of functional units participating in a redundant data transmission over multiple communication links according to embodiments;
- Fig. 5: illustrates a schematic diagram of functional units participating in a multi-connectivity transmission according to the state of the art; and;
- Fig. 6: illustrates a schematic diagram of functional units participating in a multi-connectivity transmission according to the state of the art.

### Description of Examples

At present, traditional Wi-Fi protocols still struggle to provide high availability communications for safety-critical applications. In order to meet this challenge, advanced protocols and scheduling mechanisms need to be developed. These protocols are expected to improve the packet transmission to redundantly reserve and access the wireless medium, minimizing transmission errors, and guaranteeing predictable communication.

As a primary contribution towards redundant transmission over more than one communication link in a wireless network, the Applicant of the present proposal has disclosed a method and system for enhanced reliability using duplicate transmission through Multi-Link Operation as disclosed in International Patent Application PCT/EP2023/069039 - yet unpublished at the time of filing the present proposal - being incorporated herein by reference in its entirety and hereinafter referred to as the '039 proposal.

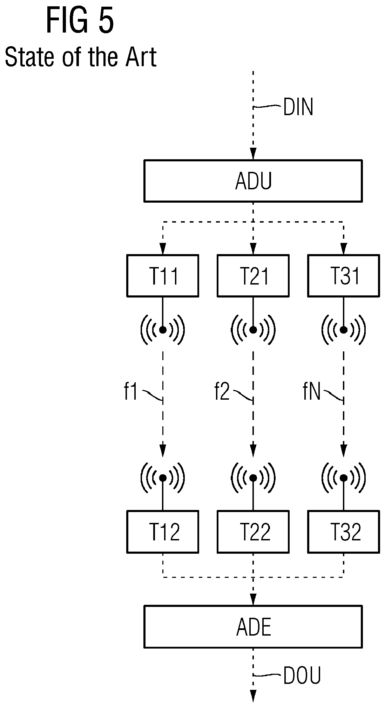

Fig. 5 illustrates a schematic diagram of functional units participating in a multi-connectivity transmission according to the '039 proposal. An application application-layer duplication ADU is shown on top of FIG5, the first application application-layer duplication ADD receiving input data DIN from a not further specified source.

The application-layer duplication ADD is connected with a plurality of transceiver modules T11, T21, T31. Each transceiver modules T11, T21, T31 operates as a wireless radio transceiver, which is symbolized in the drawing without reference sign by a common symbol for a wireless radio device. Transceiver modules may be at least partially implemented as software instances. The aforementioned applies in an analogous manner also for transceiver modules T12, T22, T32 associated with an application-layer deduplication ADE.

The application-layer duplication ADD inspects data units or data packets of the input data DIN being bidirectionally exchanged with the application application-layer duplication ADU.

The application-layer duplication ADU generates two duplicates of a data unit, the number or quantity of duplicates of data units to be generated being determined by a number or quantity of communication links f1, f2, fN being determined and set up for transmitting the data unit and its two duplicates on one distinct communication link f1, f2, fN.

Each of the multiple transceiver modules T11, T21, T31, T12, T22, T32 may operate on different frequencies or channels, allowing the first transceiver TRA to operate as a WiFi base station and to maintain multiple communication link f1, f2, fN in one or multiple frequency bands simultaneously. The communication links f1, f2, fN are operated bidirectionally.

The communications system as shown in FIG. 5 uses capabilities offered by the WiFi 7 standard (IEEE 802.11be), or more specifically a Multi-link Operation or MLO. The MLO-capable application application-layer duplication ADU and the multiple transceiver modules T11, T21, T31 maintain multiple active communication links f1, f2, fN in one or multiple frequency bands simultaneously, in contrast to single connections as utilized by the previous stage of WiFi 6 (IEEE 802.11 ax). An application-layer deduplication ADE is shown on the bottom of FIG5, the application-layer deduplication ADE being fed with output data DOU from the transceiver modules T12, T22, T32.

The application-layer deduplication ADE inspects data units received through the communication links f1, f2, fN from its transceiver modules T12, T22, T32. The application-layer deduplication ADE may reduce a data unit received along with its duplicates to one data unit, thereby eliminating redundant data in general or, more specifically, discarding duplicate data units retaining only a single instance of the initial data unit.

In general, duplication and de-duplication or elimination increase a reliability of packet transmissions by sending copies of data units or data packets via disjoint links and eliminating duplications of the packets at receiver side. Notable examples of such duplication are IEEE 802.1CB Frame Replication and Elimination (FRE), (industrial) Parallel Redundancy Protocol, (i)PRP, Broadcasting frames in IEEE 802.11 mesh networks, and 3GPP PDCP, TS 138 323 - V16.2.0 - 5G. The current version of the standard IEEE 802.11be Draft 3.1, available since March 2023, and the examples of the state of the art do not provide a specification for packet duplication using multilink operation in 802.11becompliant networks. More specifically, a frame duplication mechanism at the transmitting MLD, frame identification for duplicated frames and a duplication elimination mechanism at the receiving MLD are missing. Thus, an extension of the IEEE 802.11be based Multi-Link Operation mechanism is proposed which enables frame duplication.

A notable limitation of the '039 proposal as shown in FIG. 5 is its reliance on application-layer software for packet duplication and de-duplication. This software-based approach to handling data unit duplication and de-duplication may result in a performance bottleneck with respect to throughput. Combined with the static nature of the '039 proposal, this may lead to resource wastage in scenarios where packet duplication is unnecessary due to a good channel quality or even create issues by failing to increase the number of redundant paths due to a prevailing queue of data units to be sent.

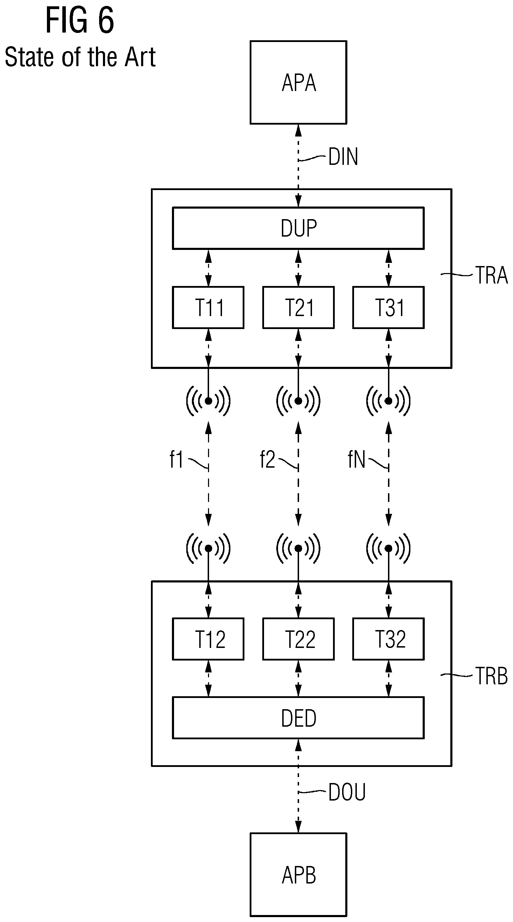

FIG. 6 shows an alternative approach falling under the '039 proposal mitigating its reliance on application-layer software for packet duplication and de-duplication. In this approach, applications APA, APB are not required to include an application-layer duplication ADU and/or an application-layer deduplication ADE. According to the alternative approach falling under the '039 proposal as shown in FIG. 6, the functionality of duplicating and de-duplicating has been moved to a data unit duplication module DUP and/or a data unit deduplication module DED, both being integrated into a first transceiver TRA and/or second transceiver TRB, respectively.

A notable limitation of the '039 proposal as depicted in FIG. 5 and FIG. 6 is its lack of mechanisms that facilitate flexible management of high availability communications, specifically in terms of »seamless redundancy«. The '039 proposal does not support the ability to dynamically adjust and modify the degree of redundancy, as it is constrained to a fixed configuration of three communication links. The first and the second application APA, APB may merely packetized input data DIN and/or output data DOU with the first transceiver TRA and/or second transceiver TRB and do not require to handle the duplication/de-duplication mechanism handle on an application layer such as the application-layer duplication ADU and/or application-layer deduplication ADE known from FIG. 5.

A further limitation of the '039 proposal as depicted in FIG. 5 and FIG. 6 is its lack of mechanisms that, under optimal channel conditions, allow the transmission of only a single packet. Instead, it mandates the use of all three channels and two duplicates for transmission.

Due to the aforementioned mentioned limitations in flexibility, the redundant transmission according to the '039 proposal is also characterized as is a »brute force« or multi-connectivity transmission. The attribute multi-connectivity may imply that the connectivity necessarily uses a fixed number of predetermined communication links f1, f2, fN, a fixed quantity of transceiver modules T11, T21, T31 on one communication end, and a fixed number of transceiver modules T12, T22, T32 on the opposite end.

Furthermore, it would be desirable to adapt the static redundancy of the '039 proposal to environmental conditions such as channel conditions, throughput, upload or download capacity, etc. Considering these environmental conditions, among others, is identified as a particular feature of embodiments proposed hereinafter in connection with the advantages described further below, whereby one of these advantages may also be referred to as context-awareness.

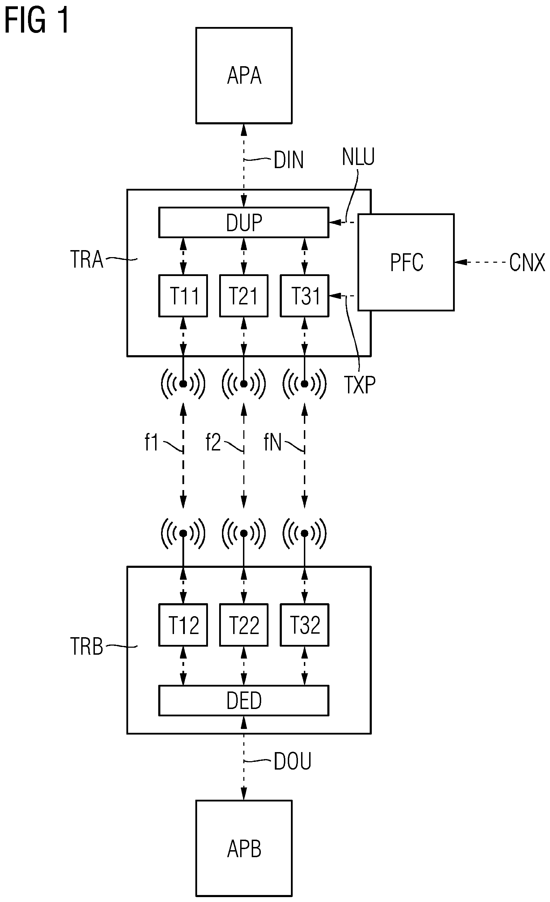

Hereinafter, the present embodiments are explained along with their advantages over the prior art. In FIG. 1, a schematic representation of functional units participating in a redundant data transmission is provided, illustrating a redundant data transmission multiple communication links according to an embodiment of the invention.

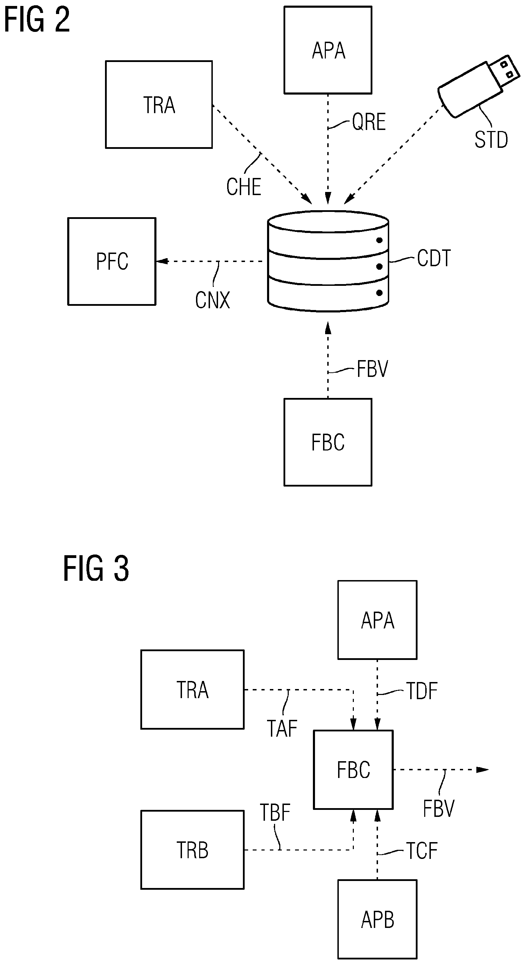

A first application APA is shown on top of FIG2, the first application APA feeding input data DIN to a first transceiver TRA. Conversely, the first transceiver TRA may be capable of transmitting data DIN back to the first application APA, thereby facilitating a bidirectional communication flow. Accordingly, the first application APA may be bidirectionally exchange data DIN with a first transceiver TRA.

In the ensuing discourse, it is to be comprehended that the terminology employed to denote unidirectional data flows serves merely as illustrative depictions. These depictions do not, in any manner, preclude the possibility of a bidirectional data flow. Terms such as »Input«, »Output«, »Handover«, and the like, are to be interpreted as encompassing their respective converse implications, namely »Output«, »Input«, »Takeover«, and so forth. It is imperative to note that all embodiments elucidated herein, pertaining to redundant data transmission in a wireless network over multiple communication links, may be understood to operate in both bidirectional and/or unidirectional manners.

The first transceiver TRA may comprise a data unit duplication module DUP and a plurality of transceiver modules T11, T21, T31. Three transceiver modules T11, T21, T31, as illustrated in the drawing, may correspond to configured transceiver modules T11, T21, T31 from a - not depicted - pool of potential transceiver modules, that may be dynamically configured or terminated on demand. Consequently, these three transceiver modules T11, T21, T31 may be perceived as a snapshot of configured transceiver modules T11, T21, T31. A quantity of these configured transceiver modules T11, T21, T31 may dynamically increase or decrease depending on requirements of the communication link between the first transceiver TRA and the second transceiver TRB, to which they contribute. One or more of the configured transceiver modules T11, T21, T31 may operate a wireless radio transceiver, which is symbolized in the drawing without reference sign by a common symbol for a wireless radio device. Transceiver modules may be at least partially implemented as software instances. Therefore, the configured transceiver modules T11, T21, T31, as illustrated, may be understood as actual instantiated software modules T11, T21, T31. The aforementioned applies in an analogous manner also for the transceiver modules T12, T22, T32 as part of the second transceiver TRB or associated with the second transceiver TRB.

The first transceiver TRA may inspect data units or data packets of the input data DIN being bidirectionally exchanged with the first application APA. A packet flow controller PFC may be integrated or assigned to the first transceiver TRA. The first transceiver TRA may comprise a data unit duplication module DUP being at least partially involved in inspecting data units. The data unit duplication module DUP may generate one or more duplicate of a data unit when directed by the first transceiver TRA. The data unit duplication module DUP may, additionally or alternatively, generate duplicates of a data unit when directed by the packet flow controller PFC. The number or quantity of duplicates of data units to be generated may be determined by the packet flow controller PFC. The packet flow controller PFC may determine or select a number or quantity of communication links f1, f2, fN to be utilized for transmitting the data unit and the at least one duplicate. In accordance with a configuration that includes three communication links f1, f2, fN, as depicted in FIG. 2, the data unit and its two duplicates may each be transmitted or received on separate and distinct communication links f1, f2, fN.

Each of the multiple transceiver modules T11, T21, T31 may operate on different frequencies or channels, allowing the first transceiver TRA to operate as a WiFi base station and to maintain multiple communication link f1, f2, fN in one or multiple frequency bands simultaneously.

The embodiments may thereby use capabilities as offered by the WiFi 7 standard (IEEE 802.11be), or more specifically a Multilink Operation or MLO as offered by the WiFi 7 standard. The MLO-capable transceivers TRA, TRB may maintain multiple active communication links f1, f2, fN in one or multiple frequency bands simultaneously, in contrast to single connections as utilized by the previous stage of WiFi 6 (IEEE 802.11ax). Frequency bands used to operate the communication links f1, f2, fN may be unlicensed - e.g. in the frequency bands around 2.4 GHz, 5 GHz, 6 GHz - or licensed - e.g. in the frequency band 3.7-3.8 GHz - or reserved exclusively for special purposes, such as specific frequency bands used in Intelligent Transportation Systems, or ITS. While Multi-link Operation is architected to empower WiFi devices or base stations to enhance their network performance by mapping several types of traffic to more than one communication link, the embodiments may advantageously utilize Multi-link Operation for providing an adjustable degree of redundancy and the enhancement of transmission reliability. This proves particularly beneficial for high-availability message exchange and/or safety-critical applications and services.

The first transceiver TRA and its counterpart, the second transceiver TRB, may be set up as base stations TRA, TRB, between which a plurality - in the presently described embodiment: three - of wireless connections or communication links f1, f2, fN may be established. The communication links f1, f2, fN may be operated bidirectionally.

A second application APB is shown on the bottom of FIG2, the second application APA being fed with output data DOU from the second first transceiver TRB. Conversely, the second transceiver TRB may be capable of transmitting data DOU to the second application APB, thereby facilitating a bidirectional communication flow. Accordingly, the second application APB may be bidirectionally exchange data DOU with the second first transceiver TRB.

The second transceiver TRB may inspect data units received through the communication links f1, f2, fN from its transceiver modules T12, T22, T32. The second transceiver TRB may comprise a data unit deduplication module DED being at least partially involved in inspecting data units received from its transceiver modules T12, T22, T32. The second transceiver TRB may inspect incoming data units or data packets of the output data DOU being bidirectionally exchanged with the second application APB. The data unit duplication module DUP may reduce a data unit received along with its duplicates to one data unit, thereby eliminating redundant data in general or, more specifically, discarding duplicate data units retaining only a single instance of the initial data unit.

Although the preceding description and the drawing has differentiated the first transceiver TRA and the second transceiver TRB for the sake of clarity to illustrate one communication flow, the two transceivers TRA, TRB may be substantially identical in real configurations to ensure a communication flow in both directions. In order to realize a genuine bidirectional exchange, both the first and the second transceiver TRA, TRB may be each equipped with respective data unit duplication module DUP, data unit deduplication module DED and/or packet flow controller PFC.

The packet flow controller PFC may select a number NLU of multiple communication links f1, f2, fN to be used for transmitting the data unit and the at least one duplicate. The packet flow controller PFC may issue an instruction to employ the specified number NLU of multiple communication links f1, f2, fN to the data unit duplication module DUP to prompt the data unit duplication module DUP to generate a number of duplicates of the data unit, the number of duplicates aligning with the number NLU of multiple communication links f1, f2, fN to be used for transmitting the data unit and its duplicates.

The packet flow controller PFC may adjust at least one communication parameter TXP of one or more communication links f1, f2, fN. The packet flow controller PFC may issue an instruction to employ the communication parameter TXP to at least one of the transceiver modules T12, T22, T32 to prompt a respective transceiver module T12, T22, T32 to adjust its transmission or receiving characteristics in accordance with the communication parameter TXP.

The embodiments may advantageously utilize context information CNX in order to adapt flexibly to external circumstances. This context information CNX may be fed into and used by the packet flow controller as shown in FIG. 1. The context information CNX may encompass data being pertinent to the transmission of the data unit including current and historic information, as well as traditional information, such as Quality of Service parameters contained in packet headers of the data units or data packets. Context information CNX may be stored in a context database CDT which is not shown in FIG. 1. Context information CNX may include dynamic and static a-priori information. While the attribute a-priori may refer to information being obtained prior to a transmission of a data unit - including before generating at least one duplicate of the data unit, before selecting, a number of multiple communication links, before adjusting at least one communication parameter for a communication link, or before transmitting the data unit and the at least one duplicate - the attribute a-posteriori may refer to information being obtained after a successful, suboptimal, or unsuccessful reception of the data unit at the opposite communication endpoint of the redundant data transmission.

Dynamic a-priori information may refer to data that may change frequently and may be updated in real-time. This type of information is typically gathered from ongoing processes or current conditions. In contrast, static a-priori information may refer to data remaining substantially constant over time and/or not requiring frequent updates. This type of information may usually be predefined and/or stable over time.

The inclusion of both types of information, dynamic and/or static a-priori information, may allow the system to be responsive to changing conditions while also maintaining a foundation of consistent data. The concept of generating and utilizing context information CNX is explained more comprehensively in the descriptions related to FIG. 2 and FIG. 3.

The packet flow controller PFC may feature an interface for receiving context information CNX such as one or more context vectors CNX. The context information CNX may cause or influence the packet flow controller PFC of selecting a number NLU of multiple communication links - three according to the described embodiment according to FIG. 1 - to be used for transmitting the data unit and its duplicates - two duplicates according to the described embodiment according to FIG. 1 - wherein selecting the number NLU of used links and/or setting up the respective communication links f1, f2, fN may be set up during runtime.

The context information CNX may cause or influence the packet flow controller PFC to adjust at least one communication parameter TXP for adjusting at least one of the transceiver modules T12, T22, T32 at runtime. The packet flow controller PFC may decide how many communication links f1, f2, fN and which transmission parameters TXP may be used for transmitting data units based on context information CNX.

In a succinct interim evaluation, it can be affirmed that the embodiments distinguish themselves by leveraging the Multi-link Operation or MLO as offered by the WiFi 7 standard transmission to increase redundancy and thus transmission security, rather than using the increased data connection bandwidth originally intended by the Multi-link Operation or MLO. This approach deviates from the conventional aim of MLO to simply expand data connection bandwidth. A further notable merit of these embodiments lies in their ability to evolve formerly static multi-connectivity transmissions - originally established with a fixed and immutable set of transmission channels - into a flexibly configurable and adjustable multiplicity of communication links, the quantity of which may be dynamically tailored in real-time during operation. An expanded utilization of context information CNX will lead to additional advantages in further embodiments as described below.

In the forthcoming section, a context database CDT is illustrated in line with FIG. 2 along with various possible sources of a-priori information. A-priori information may encompass data being pertinent to the transmission of the data unit including current and historic information. This a-priori information may include dynamic and/or static a-priori information.

Dynamic a-priori information may include:
- Classic Quality of Service or QoS requirements QRE for a specific packet - such as a label for mission-critical messages - or for all packets in a packet stream, may be provided by the by an application APA involved and stored within the context database CDT. These requirements QRE may include attributes such as latency, packet loss, and time to live.
- A current location information of a respective transceiver TRA, TRB, as provided by one or both the applications APA, APB. The location information may, for instance, encompass scenarios such as a vehicle that is presently situated in front of a tunnel.
- A current velocity a respective transceiver TRA, TRB, which may be provided by applications APA. Data structures referring to a current velocity could include diverse types of trains passing tracks at different velocities.
- Current channel estimations CHE for each of the multiple communication links f1, f2, fN may be provided by either of the transceivers TRA, TRB and stored within the context database CDT.
- Feedback collected from different instances regarding a success, non-success, or potential issues related to previous message transmissions with given parameters. Such feedback collected from different instances may be fed into a feedback collector FBC which may generate structured feedback information FBV such as a feedback vector FBV which may be stored within the context database CDT. Information retrieved from the context database CDT may allow the transceivers TRA, TRB or the system including these transceivers TRA, TRB to learn from past transmissions and adjusting future transmissions.
- A current application type, such as vital vs non-vital messages; monitoring traffic that may not be real-time critical vs time-critical vehicle management messages such as start, stop, etc.
- A current application state which may encompass details such as records of previously lost sequences, a buffer status of a video streaming application, or the sizes of log messages awaiting transmission, among other factors.
- A current network state from other locations, such as network issues in upcoming areas. Such information may allow to anticipate and adapt to potential network issues.

Static a-priori information may include:
- Geospatial data including geocoordinates of an infrastructure, such as a train track, highway, or AGV route may be delivered by a static data source STD which is symbolized in the FIG. 2 by a USB stick since these coordinates may be typically provided by an external source and remain constant over a long time period.
- Past channel estimations at current location and with current velocity stored in the context database CDT.
- Information pertaining to the quantity of duplicated data units requisite for the successful execution of transmissions.

In the forthcoming section, a feedback controller FBC is illustrated in line with FIG. 3 along with various possible sources of a-posteriori information. A-priori information may encompass feedback about successful data unit reception being collected after the reception.

The a-posteriori information may be fed into a feedback collector FBC which may generate structured feedback information FBV such as a feedback vector FBV. The feedback vector FBV may be subsequently stored within the context database CDT. The packet flow controller PFC may utilize the context database CDT to retrieve context information CNX stored therein in order to optimize the redundant data transmission over multiple communication links. Feedback pertaining to a success, non-success, or potential issues related to message transmissions may be collected a-posteriori from different sources, including the first transceiver TRA, the second transceiver TRB, the first application APA, and the second application APB, in the following manner:
- Feedback pertaining to a successful transmission of a data unit collected from the first transceiver TRA - hereinafter referred to as Type A feedback TAF - may be inferred by a regular acknowledgement of a message reception that is part of most wireless protocols.
- Feedback pertaining to a failed reception of a data unit collected from the second transceiver TRB - hereinafter referred to as Type B feedback TBF - may be inferred by a missing or lost acknowledgement of a message reception.
- Feedback pertaining to a successful transmission of a data unit collected from a source application APA - hereinafter referred to as Type C feedback TCF - or collected from a destination application APB - hereinafter referred to as Type D feedback TDF - may be inferred on an application layer of the respective source application APA or destination application APB.

Feedback information may further include parameters of the transmission such as a duration of the transmission, a number of retries, back-off - i.e. strategy used to manage network congestion and avoid collisions - queue size, number of duplicated packets, etc. The feedback information may be used to update historic information databases such as the context database CDT.

The packet flow controller PFC may also take »traditional« information into account. That is, all available packet header information may be integrated into decisions. For instance, the following QoS information can be used for decisions:
- QoS requirements may be derived from a packet header, for example, from the Differentiated Services Code Point or DSCP field in a User Datagram Protocol of UDP packets or from a Traffic Identifier or TID information.
- The end-to-end application may indicate the QoS requirements for a given packet or stream of packets, either by a custom header or trailer in the payload of the packet or utilizing additional application information contained in other network packets. They could also be inferred based on source and/or destination MAC address or Media Access Control address.

In an exemplary assumption that one of the transceivers may be stationary, while the other transceiver is moving along fixed and repeating trajectories - e.g., a train on a train track, a vehicle on a highway, or an Automated Guided Vehicle or AGV on a pre-programmed route in a factory or warehouse - the packet flow controller PFC may us all information in the context information CNX or context vector CNX in order to predict link quality at transmission time.

For prediction, simple look up tables or more advanced machine learning models, such as large language models, may be used. Note that such prediction models may be specific to a specific scenario, for instance a train line, highway, or Automated Guided Vehicle or AGV path. Measures to ensure timely and reliable transmission of a message may include:
- adjusting the number of links used for transmitting duplicated packets;
- adjusting the number of duplicated packets over the available number of links;
- adjusting allocation in a time-frequency grid including Orthogonal Frequency-Division Multiplexing OFDM and/or Orthogonal Frequency-Division Multiple Access OFDMA;
- adjusting a modulation and coding Scheme or MCS of the transmission.

Overall, this may lead to a scenario where »best« communication links f1, f2, fN may be assigned for redundant high availability packet transmission, while unused communication links - not shown - with background channel quality may be used for best effort traffic, e.g., logging data.

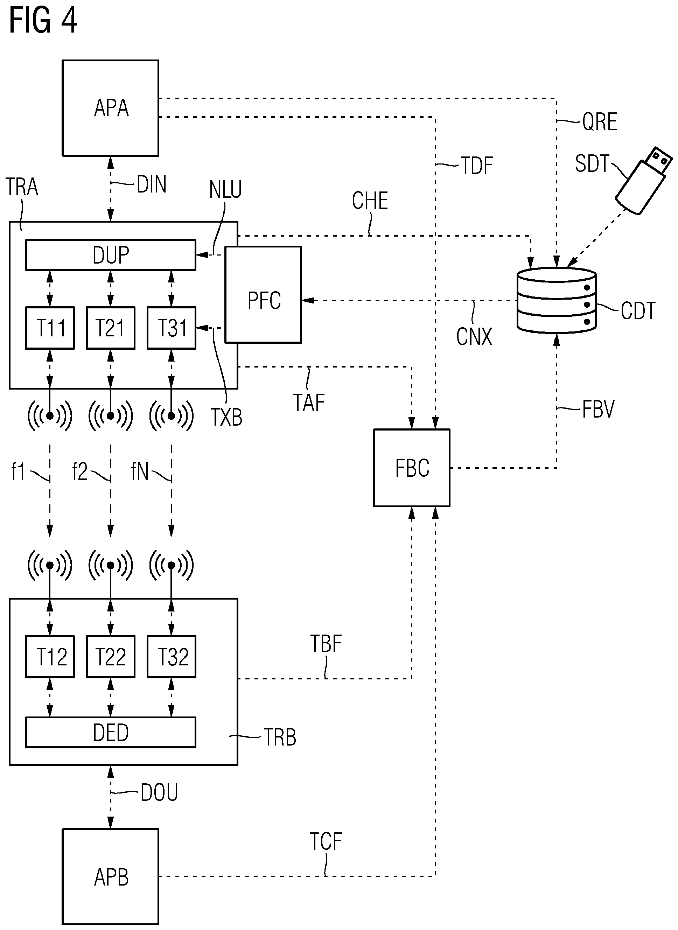

FIG. 4 presents an expanded view of a potential redundant data transmission across multiple communication links, wherein functional units as shown in FIGs. 1-3 are included.

While the left part of FIG. 4 essentially shows the representation of the redundant communication system known from FIG. 1, the right part of FIG. 4 displays feedback and feedforward paths for various pieces of information as explained in FIGs 2, 3 and for eventually collecting this information in the context database CDT and making it available as context information CNX or as a context vector CNX for the packet flow controller PFC.

The feedback controller FBC is illustrated in line with FIG. 3 along with various possible sources of a-posteriori information TAF, TBF, TCF, TDF. The a-posteriori information TAF, TBF, TCF, TDF may be fed into the feedback collector FBC which may generate structured feedback information FBV such as a feedback vector FBV. The feedback vector FBV may be subsequently stored within the context database CDT. The context database CDT may further receive a-priori information CHE, QRE from various possible sources APA, TRA, SDT.

The embodiments distinguish from the prior by their ability to combine context information and application information for dynamically adapting the multiple communication links. The embodiments are further characterized by the adaptation of the number of duplicated packets to be transmitted, said adaptation being based on context information and application information. Additionally, the embodiments may integrate feedback for transmission from multiple sources, thereby enriching the foundation for improving the transmission. The embodiments are further characterized by a novel combination of duplication mechanisms and Multi-link Operation or MLO thereby facilitating a dynamic multi-link operation that adjusts according to required and predicted Quality of Service (QoS) requirements for specific messages.

In summary, the proposed embodiments relate to a redundant data transmission over multiple communication links, involving a redundant duplication of a data unit, a selection of multiple communication links to be used for transmitting the data unit, an adjustment of a number of multiple communication links for transmission of the data unit and the duplicate, and a de-duplication of the at least one received duplicate to restore the data unit.

The proposed embodiments present several advantages over the existing state of the art. The redundancy of the transmission may be flexibly controlled, as the number of duplicates generated is determined by a packet flow controller that at least may partially inspect the data unit and optionally utilize context data. This allows for a more efficient use of resources by providing only the necessary and adjustable amount of redundancy. The transmission is optimized in that the packet flow controller may select a number of communication links to be used for redundant data exchange in order to improve transmission reliability. Additionally, the method allows for adaptive communication in that the packet flow controller may adjust at least one communication parameter of one or more communication links, enabling the transmission to adapt to changing network conditions and further improving the transmission reliability.

It is to be understood that the elements and features recited in the appended claims may be combined in different ways to produce new claims that likewise fall within the scope of the present invention. Thus, whereas the dependent claims appended below depend on only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A method for redundant data transmission over multiple communication links comprising:
- generating, by a first transceiver (TRA), at least one duplicate of a data unit, a number of duplicates being determined by a packet flow controller (PFC);
- selecting, by the packet flow controller (PFC), a number (NLU) of multiple communication links to be used for transmitting the data unit and the at least one duplicate;
- adjusting, by the packet flow controller (PFC), at least one communication parameter (TXP) of one or more communication link in said number (NLU) of multiple communication links;
- transmitting, by the first transceiver (TRA), the data unit and the at least one duplicate over said number (NLU) of multiple communication links to a second transceiver (TRB); and;
- receiving, by the second transceiver (TRB), at least one duplicate from said number (NLU) of multiple communication links and de-duplicating the at least one duplicate to restore the data unit.

2. The method according to claim 1, wherein the packet flow controller (PFC) is at least partially involved in inspecting the data unit.

3. The method according to one of the aforementioned claims, wherein the steps of selecting and adjusting by the packet flow controller (PFC) include an inclusion and evaluation of context information (CNX).

4. The method according to one of the aforementioned claims wherein context information (CNX) is retrieved from a context database (CDT).

5. The method according to one of the aforementioned claims including the step of determining, by the second transceiver (TRB), at least one parameter related to said redundant data transmission of the data unit; and; at least indirectly feeding back said at least one parameter to the packet flow controller (PFC).

6. The method according to one of the aforementioned claims including the step of determining, by at least one application (APA, APB) utilizing the redundant data transmission, at least one parameter related to said redundant data transmission of the data unit; and; at least indirectly feeding back said at least one parameter to the packet flow controller (PFC).

7. The method according to one of the aforementioned claims including the step of determining one of a parameter related to a duration of said redundant data transmission, a number of retries or other back-offs related to said redundant data transmission, a queue size encountered in a processing queue or transmission queue for queuing the data unit.

8. The method according to one of the aforementioned claims including the step of determining one of a parameter related to a duration of said redundant data transmission, a number of retries or other back-offs related to said redundant data transmission, a queue size encountered in a processing queue or transmission queue for queuing the data unit.

9. The method according to one of the aforementioned claims including the step of determining one of a parameter related to a current location information of one or more transceivers (TRA, TRB), a current velocity of one or more transceivers (TRA, TRB), a current channel estimation (CHE) for one or more of said multiple communication links, an application state, a buffer status, and a current network state.

10. The method according to one of the aforementioned claims including the step of determining one of a parameter related to geospatial data, and past channel estimations at a current location.

11. The method according to one of the aforementioned claims including the step of determining a parameter related to the number of duplicates requisite for successfully transmitting the data unit.

12. A packet flow controller set up for association with a first transceiver (TRA) for redundant data transmission over multiple communication links to a second transceiver (TRB), the first transceiver (TRA) including a duplication unit (DUP) for generating at least one duplicate of a data unit, the first transceiver (TRA) being setup for transmitting the data unit and the at least one duplicate over said multiple communication links to a second transceiver (TRB) being setup to receive at least one duplicate from said multiple communication links and de-duplicating the at least one duplicate to restore the data unit, the packet flow controller including:
- means for determining a number of duplicates for at least one duplicate of a data unit being generated by the first transceiver (TRA);
- means for selecting a number (NLU) of multiple communication links to be used for transmitting the data unit and the at least one duplicate;
- means for adjusting at least one communication parameter (TXP) of one or more communication links in said number (NLU) of multiple communication links;

13. A redundant data transmission system over multiple communication links including two or more packet flow controllers according to claim 12.
